# EUROPEAN PATENT SPECIFICATION

(11) **EP 0 265 280 B1**
(45) Date of publication and mention of the grant of the patent: **24.04.1996**
(21) Application number: 87309392.6
(22) Date of filing: 23.10.1987
(51) Int. Cl.: G06F 17/20

(54) **Machine translation system and method**
Maschinelles Übersetzungssystem und -Verfahren
Système et méthode de traduction par machine

(30) Priority: 24.10.1986 JP 251820/86
(43) Date of publication of application: 27.04.1988
(73) Proprietor: KABUSHIKI KAISHA TOSHIBA, Kawasaki-shi, Kanagawa-ken 210, Tokyo (JP)
(72) Inventor: Takeda, Kimihito c/o Patent Division, Minato-ku Tokyo (JP); Hirakawa, Hideki c/o Patent Division, Minato-ku Tokyo (JP); Adachi, Hisahiro c/o Patent Division, Minato-ku Tokyo (JP); Amano, Shinya c/o Patent Division, Minato-ku Tokyo (JP)
(74) Representative: BATCHELLOR, KIRK & CO.

(56) References cited:
- EP-A- 196 898
- EP-A- 0 081 784
- EP-A- 0 138 619
- M.Kay : " The proper place of man and machine in language translation" Xerox Palo Alto Research Centre, CLS-80, 1980, pages 1-27.

## Description

The present invention relates to a machine translation system for processing an original sentence of a first language to obtain a translated sentence of a second language and, more particularly, to a machine translation system which can improve translation efficiency.

In recent years, various machine translation systems for translation using a computer system have been developed, e.g., a processing system for translating English sentences into Japanese sentences or vice versa, and the like.

A basic processing operation in these systems will be briefly described. Morphemes constituting an input original sentence or its sentence structure are analyzed to divide the original sentence into predetermined processing units, e.g., words ( or phrases ). A translation dictionary is referred to for each processing unit to obtain a translated word ( or phrase ) corresponding to the processing unit. The translated words ( or translated phrases ) are combined in accordance with a given translation rule, thus obtaining a translated sentence.

However, since a reliable technique for interpreting the meaning of a natural language has not yet been established, it is difficult to immediately obtain an appropriate translated sentence through the machine translation. More specifically, the English word "find", for example, has meanings including "to learn", "to perceive", "to come upon", "to attain", "to solve", "to detect", "to uncover", and "to discover". When this word must be translated into Japanese, it has different translated words corresponding to the above meanings. In this manner, a single original word often has a plurality of translation possibilities. In this case, selection of the translated word from multiple possibilities largely influences the quality of translation from an original sentence into a translated sentence.

In a conventional system, a plurality of translation possibilities corresponding to a processing unit (original word) are presented to an operator, and the operator determines and selects appropriate translated words to constitute a translated sentence.

However, even if a translated sentence is obtained in this manner, an inappropriate translated work often still remains in the translated sentence. For this reason, the operator must correct the inappropriate translated word in the translated sentence through post-edit processing.

When such edit processing is performed, if a display device has a fixed display format for the translation result, incorrect choices or selections may be made. For example, when a translated sentence including translated words to be corrected and the original corresponding sentence are displayed simultaneously and translation/edit processing is performed while comparing the two sentences, it is easy to understand the correspondence between the two sentences. A system of this kind is disclosed in EP 00 81 784. However, it is hard to grasp consistency or context in the document when it is displayed in this way, and it is not possible to control the display of the known system so as to operate differently. As a result, even though appropriate translated words may be obtained for each translated sentence, the translated sentence may be inappropriate when viewed in the context of in the entire document.

In alternative arrangements it is possible for original sentences and their corresponding translated sentence to be displayed continuously. In this case, the above mentioned drawbacks can be avoided, and the context or consistency in the entire document can be satisfactorily maintained.

However, with this method, it often is difficult to quickly and reliably grasp the correspondence between the original and translated sentences and that between original and translated words therein.

Another possibility is that shown in EP 19 68 98 which displays original and translated sentences using a vertical "split screen" method, with original sentences on one side and translated sentences on the other, so as to enable the operator to easily see the relationships between them. However, this arrangement suffers from the disadvantage that the width of screen available for editing is correspondingly limited, because of the "fixed mode" display.

Thus, the display formats of the translation result impairs the efficiency of the translation/edit processing, thereby interfering with effective post process.

The present invention seeks to provide a machine translation system with which context or consistency correspondence between an original sentence and a translated sentence can be easily understood to allow efficient translation/edit processing.

Accordingly the present invention provides a method for displaying translated sentences and their corresponding original sentences for inspection on a display section of a machine translation apparatus, in which a plurality of translated sentences are displayed on at least part of the display, and corresponding original sentences can also be displayed, characterised by the provision of two different display modes which can be controlled by the operator, the two modes comprising a first mode in which only translated text is displayed for editing purposes, and a second mode, in which at least one original sentence corresponding to the currently displayed translated text is displayed in a predetermined area of the display, the second mode being invoked by a user operation which comprises the steps of:
(a) moving the cursor to a desired area of translated text; and
(b) executing a command comprising an original sentence reference request.
(c) establishing a display region for displaying original sentences; and
(d) displaying the original sentences including the part of the original text corresponding to the desired part of translated text.

Preferred embodiments of the invention will now be described by way of example, and with reference to the accompanying drawings, wherein:-

Fig. 1 shows a block diagram of an embodiment of the present invention.

Fig. 2 shows a keyboard layout for the input section of Fig. 1.

Fig. 3 shows a display format of an embodiment of the present invention.

Figs. 4 to 6 and 8 are flow charts to describe the operation of the embodiment of the present invention.

Fig. 7 shows a sample displayed screen of the present invention.

Figs. 9 and 11 show flow charts to describe another embodiment of the present invention.

Fig. 10 shows a corresponding table for use in this other embodiment of the present invention.

Fig. 12 shows a sample displayed screen of the another embodiment of the present invention.

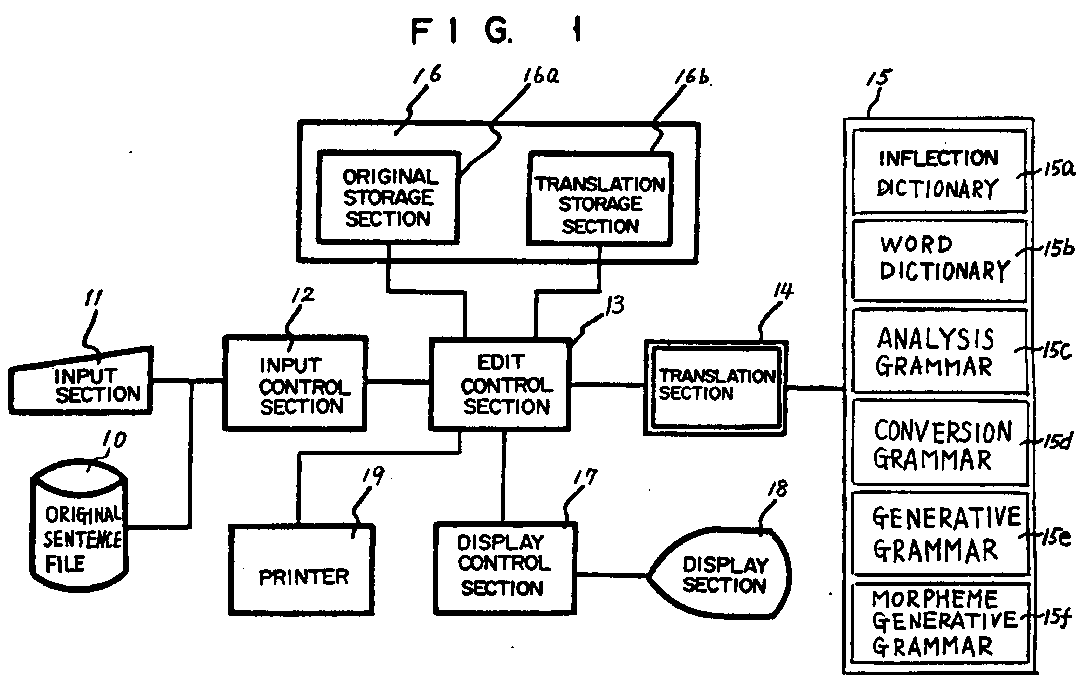

Fig. 1 shows a machine translation system according to an embodiment of the present invention. In this embodiment, English sentences are input and translated into Japanese sentences.

An English sentence input at an input section 11 comprising a keyboard is stored in an original storage section 16a as an original sentence to be translated.

An input control section 12 recognizes the type, form and contents of the original sentence to be input from an original sentence file 10, and extracts a processing unit to be translated.

A translation section 14 operates under the control of an edit control section 13. The translation section 14 refers to linguistical information necessary for translation processing which has been prestored in a dictionary section 15 to sequentially translate predetermined processing units of the original sentence in the original storage section 16a. The translated Japanese sentences which are obtained through machine translation by referring to the linguistical information, are sequentially stored in a translation storage section 16b, corresponding to the original sentence.

Further, the linguistical information stored in the dictionary section 15 includes, e.g., an inflection (regular and irregular inflection ) dictionary 15a, a word dictionary 15b, an analysis grammar 15c, a conversion grammar 15d, a generative grammar 15e and a morpheme generative grammar 15f.

The edit control section 13 drives a display control section 17. The display control section 17 displays the translated sentence stored in the translation storage section 16b on a display section 18, for example, a CRT display, after the translation of all or a part of the input sentence. The post-edit processing is executed on the translated sentence displayed on the display section 18, and is executed by, e.g., referring to the linguistical information stored in the dictionary section 15 in accordance with the control information input from the input section 11.

The translated sentence ( Japanese sentences ) corresponding to the original sentences ( English sentences) which have completed the post-edit processing are hard-copied by a printer 19.

Fig. 2 shows a keyboard layout for the input section 11. The keyboard includes a character data input key group 21, a translation instruction key 22, an edit key group 23, a function key group 24, a cursor control key group 25 on the display section 18, and the like.

The input section 11 also can call the original sentence from the original sentence file 10, instead of using direct input from the keyboard.

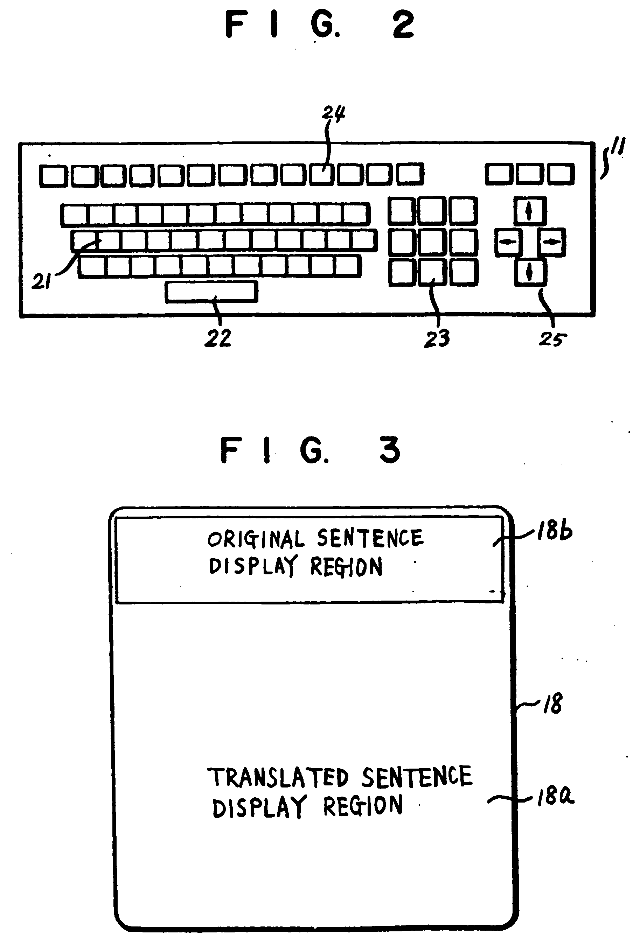

Fig. 3 shows a display screen format of the display section 18 of the embodiment of the present invention for displaying a translated sentence and the original language sentence corresponding to the translated sentence. Ordinarily, the entire display screen is only a translated sentence display region 18a. However, in this embodiment an original sentence display region 18b is established on the upper part of the display section 18 compling with the referring request. The main part of the original sentence to be inspected is displayed together with the succeeding and preceding portions of the original sentence on the original sentence display region 18b. The area of the original sentence display region 18b is predetermined.

Therefore, the part of the original sentence which corresponds to the translated sentence to be inspected is necessarily displayed on the original sentence region 18b, and the succeeding and preceding portions of the original sentence are displayed on the remaining area of the original sentence display region 18b.

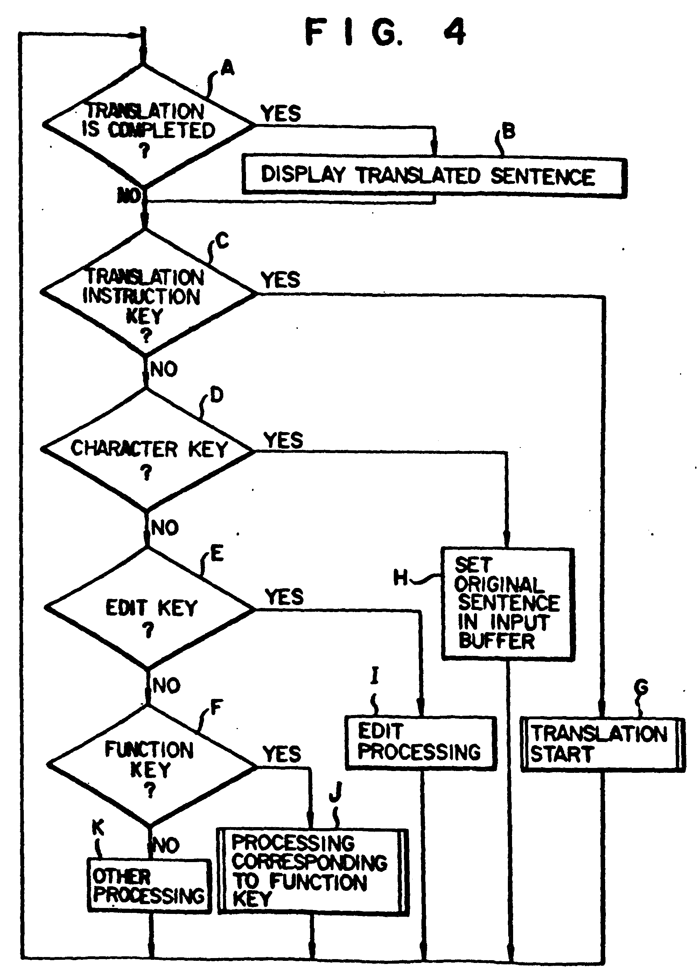

Fig. 4 shows a basic operating sequence of the system shown in Fig. 1. The edit control section 13 allows editing of the translation completion information supplied from the translation section 14 through various key information input from the input section 11 in accordance with the operating sequence shown in Fig. 4. Thus the operator controls the translation/edit processing in a convenient manner.

The edit control section 13 watches the translation processing status in the translation section 14 ( step A ). When the edit control section 13 detects the completion of the translation processing for a single original sentence, it causes the translation storage section 16b to store the translated sentence and causes the display section 18 to display it ( step B ). The operator may suppress the display of translated information until the edit request.

The edit control section 13 discriminates the key information input from the input section 11 ( steps C, D, E, and F ). If the input key information represents a "translation instruction key" ( step C ), the edit control section 13 transfers the input original sentence stored in the original storage section 16a to the translation section 14 to initiate the translation processing ( step G ).

If the input key information represents a "character key" ( step D ), its character code is stored in an input buffer ( step H ) and is also stored in the original storage section 16a.

If the input key information represents an "edit key" ( step E ), edit processing associated with the edit key is executed for the translated sentence ( step I ). Similarly, if the input key information a "function key" ( step F ), processing corresponding thereto is executed ( step J ).

If there is no key information or if the input key information is other than the above mentioned keys, other processing, e.g., hard-copy output of the translated sentence stored in section 16 ( by means of printer 19 ), is executed ( step K ).

With this operating sequence of the edit control section 13, when an operator acts the character input key group of the keyboard to input characters, the character information is sequentially set into the input buffer ( not shown ) provided in the input control section 12, and is also stored in original storage section 16a as an original sentence to be translated ( steps D and H ).

If the translation instruction key 22 is operated at an arbitrary time during a character input operation, e.g., when the input of one sentence has been completed, the translation processing for the input original stored in the input buffer is started in accordance with the key input ( steps C and G ). Upon completion of the translation processing, the translated sentence which is obtained there through is displayed on the translated sentence display region 18a of the display section 18 ( steps A and B ).

If the sentence must be edited, e.g., corrected, the cursor control key group 25 is operated to adjust the cursor position to a correcting position, and edit processing is then executed by operating the edit key group 23, e.g., correct key, insert key, delete key, and the like ( steps E and I ). In this manner, the basic operation of the machine translation process is controlled.

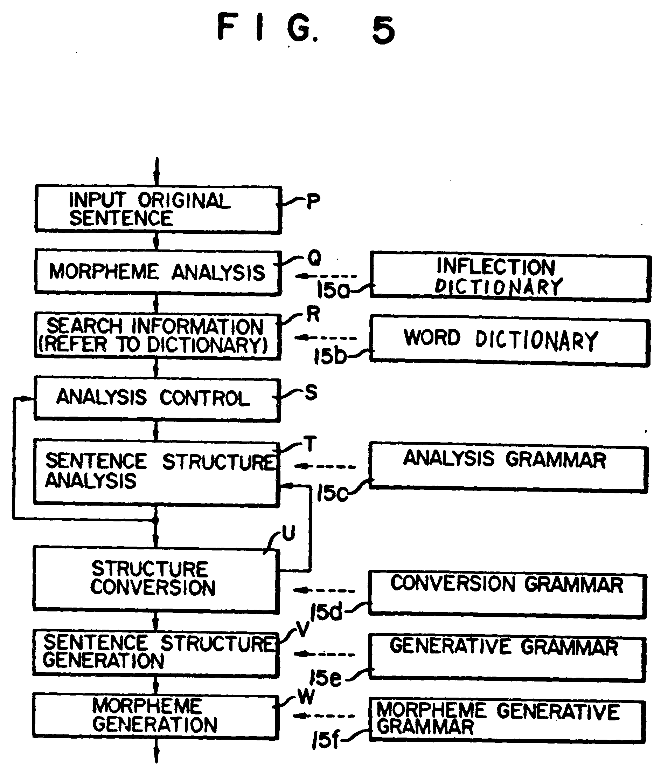

The translation processing ( step G ) for the original sentence is executed, e.g., as follows. Fig. 5 shows a processing sequence of the translation processing (step G shown in Fig. 4 ). The translation section 14 first receives an original sentence to be translated ( step P ), and analyzes the input original sentence in units of morphemes ( step Q ). Morphenes analysis processing includes processing for converting an original word, which is for exemple, conjugated or inflected, into its original form ( fundamental form ), using the inflection dictionary 15a which is stored in the dictionary section 15. For the morpheme analyzed original words, their part of speech information and translated word information and other properties are derived with reference to the word dictionary 15b ( step R ). This processing is performed by accessing the word dictionary 15b using the original word as a keyword.

Sentence structure analysis of the original sentence is performed ( step T ) under the predetermined analysis control according to the analysis grammar 15c ( step S ). Sentence structure analysis is repetitively performed until it is successful. With this sentence structure analysis, the arrangement of parts of speech of the original words constituting the original sentence, their modification relationship, tense, and the like are obtained.

Thereafter, the analyzed sentence structure is converted to the sentence structure of the translated sentence using the conversion grammar 15d ( step U ). In other words, the sentence structure of an English sentence ( original sentence ) is converted to a Japanese sentence ( translated sentence ) using the conversion grammar 15d. If sentence structure conversion is unsuccessful, it is determined that sentence structure analysis of the original sentence was erroneously performed and it is performed again.

Translation candidacies obtained for the respective words of the original sentence based on the sentence structure of the translated sentence are sorted in word order according to the linguistical format of the translated sentence, to obtain a translation sentence candidacy corresponding to the original sentence ( step V ). This sentence structure generation processing is executed in accordance with the generative grammar 15e. The translated word candidacies constituting the translated sentence candidacy are conjugated and inflected in accordance with the result of the sentence structure generation and the morpheme generative grammar 15f, thus producing the translated sentence ( step W ).

The translated sentence corresponding to its original sentence which is obtained through the translation processing is stored into the translated storage section 16b.

Basically, the translation/edit processing for the translated sentence is realized by executing processing corresponding to the edit key group 23 with respect to a word ( original word, original phrase, translated word, or translated phrase ) indicated by the cursor on the screen of the display section 18. More specifically, this processing is performed as follows:
(1) Upon operation of an insert key, a character is inserted before a cursor position.
(2) Upon operation of a delete key, a character string within a range indicated by the cursor is deleted.
(3) Upon operation of a move key, a character string within a range indicated by the cursor is moved.
(4) Upon operation of a cancel key, respective edit functions specified by the corresponding keys are made invalid.
(5) Upon operation of a modification key, other modification candidacies of a word indicated by the cursor are displayed.

When the function key 24 is operated, the following functions can be used in the translation/edit processing for the translated sentence.
(1) Upon operation of a translated word display key, a translated word for a word in an original sentence indicated by the cursor is displayed.
(2) Upon operation of a dictionary display key, the content of the dictionary section 15 is displayed using a word in an original sentence indicated by the cursor as a keyword.
(3) Upon operation of a dictionary registration key, a character string indicated by the cursor is registered in the dictionary section 15 as a new word or phrase.
(4) Upon operation of a dictionary clear key, the registered new words or phrases are cleared.

Note that indication of a character string ( word ) by means of the cursor is performed while moving the cursor on the display screen using the cursor control key group 25 and enlarging or reducing a cursor size by a cursor control key.

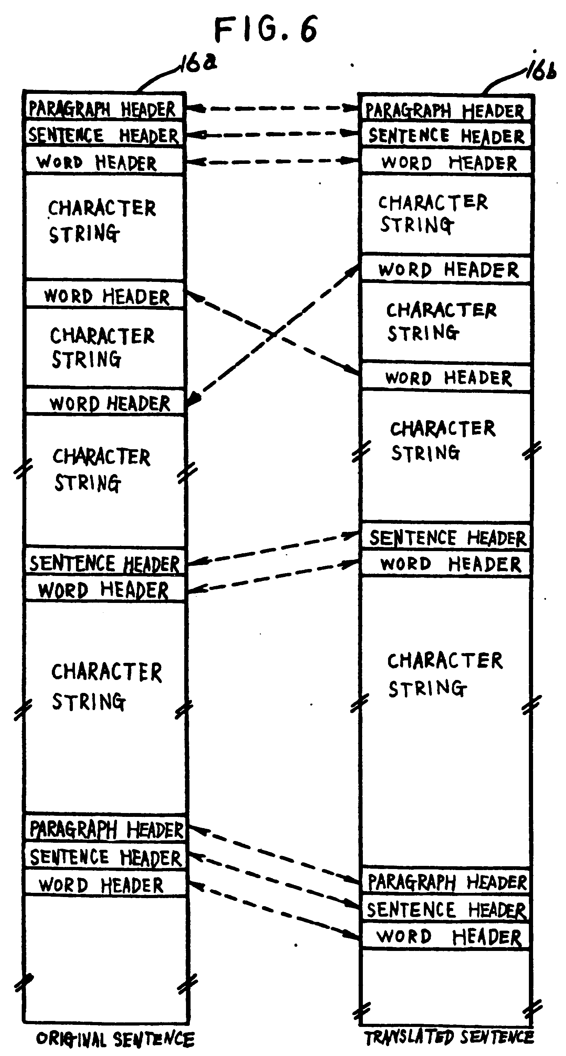

The basic translation/edit processing in this system has been described. In addition to this, the system of this embodiment has the display control function, and the details of the display control section 17 will be explained using Fig. 6.

The original sentence input from the input section 11 is not separated into translating units. Therefore, the input control section 12 divides the character strings sequentially under a constant condition. Namely, the input sentence is classified as, e.g., a general sentence, an itemized sentence, a title, etc. The judgement of condition and the recognition of the sentences are executed to said classified sentences. For example, by the condition of the general sentence, the end of sentence is recognized as being blank or new paragraph after the punctuation symbols ( . ? ! ; : etc ). However, the following cases are not classified as the end of sentence, (1) when there are punctuation symbols between the double quote ( " ), (2) when the word is stored in the dictionary with a punctuation symbol, e.g., Mr. etc. (3) when a capital letter followed by a period ( .) is repeated more than two times. In these cases, the text sentence is not recognized as the end of a sentence from the period of halfway position.
"I like fish." said he.
Mr. Smith is doctor.

A caption is recognized as a title, header, subheader, etc., by the sentence structure of "header number + body". Numerals, numerals + period, special characters or numerical patterns surrounded by parenthesis are recognized as a header number.

If a first character of the word is a capital letter or a numeral, it is recognized as the body of a title. For example, following words are recognized as a title;
Introduction
INTRODUCTION
1. Introduction
(1) INTRODUCTION

In this case, if first characters of these words are not capital letters, an article, a preposition and a conjunction, etc., are recognized as a part of the title. The sentence and the title recognized at the input control section 12 are stored in the original storage section 16a in the form shown in Fig. 6. A paragraph header is established at the paragraph being recognized. A sentence header is established as an unit of sentence recognition, and a type of sentence, a new paragraph, a number of blank and a sentence number, etc., are stored. A word header is established as an unit punctuated by a space between words before the translation completion when the original is English, and idioms, etc., are added prior to translation completion. The translated sentence having the original sentence's information is stored in the translation storage section 16b corresponding to the original storage section 16a.

The edit control section 13 sequentially receives the translated sentence from the translation storage section 16b, and displays the translated sentence on the display section 18 using the paragraph and sentence header informations. At this time, a correspondence table in which stored sentences and word addresses corresponding to the display positions on the display screen may be generated.

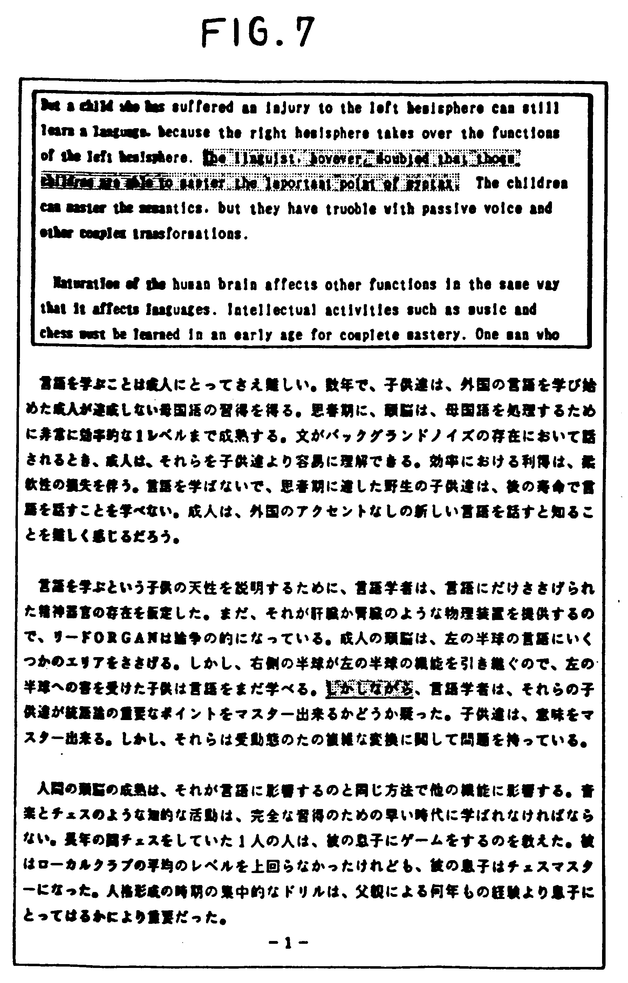

If the original language sentence is the input from the keyboard of the input section 11, the display control section 17 finds the position of the corresponding original sentence stored in the original storage section 16a based on the paragraph and sentence information stored in the translation storage section 16b, and sets up the original sentence display region 18b in the upper portion of the display screen. The original sentence and the succeeding and preceding parts of sentences are displayed as far as possible ( shown in Fig. 7 ).

Fig. 7 shows a screen on which is displayed translated Japanese sentences and the in corresponding original English sentences. The English original sentences displayed on the upper side of screem correspond to the identified original sentences.

In particularly, the part of the original English sentence masked by the dotted mesh corresponds to the translated Japanese sentence, including the underlined part to which reference was made. The succeeding and preceding sentences of the dotted mesh area correspond to the succeeding and preceding sentences of the underlined sentence of the translated sentences, and are displayed within the limits of the predetermined area established on the upper portion of the display screen.

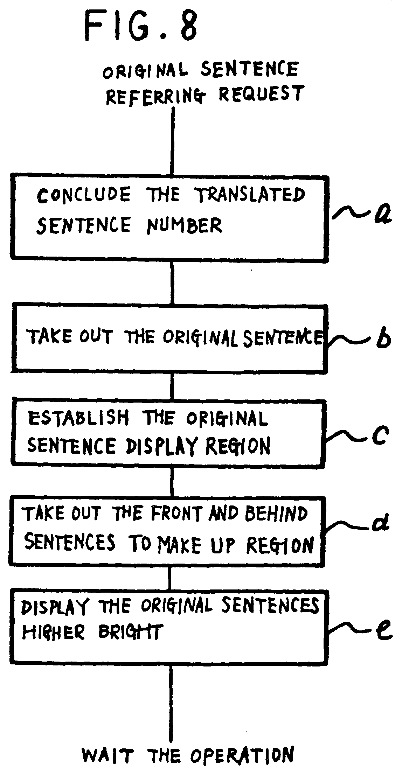

Thus, if the original sentence referring request is executed, the display control section 17 searches the corresponding original sentence in accordance with a control sequence ( shown in Fig. 8 ), and establishes the original sentence display region 18b at the upper part of the translated sentence display region 18a.

Concrete operation is explained using Fig. 8. The original sentence referring request is executed to move the cursor on the desired position using the cursor control key group 25.

Thereafter, the original sentence referring request is instructed by the function key group 24. The display control section 17 concludes the number of the translated sentence corresponding to the requested original sentence ( step a ), and takes out the original sentence having the concluded sentence number from the original storage section 16a ( step b ). The original sentence display region 18a is established at a part of the translated sentence display region 18b ( step c ). Thereafter, line numbers of the original sentences and the predetermined line number of the original sentence display region 18b are compared. If the lines of the original sentence taken out is deficient, the sentences succeeding and preceding the requested original sentence are taken out to make up the remaining region of the predetermined original sentence display region 18b ( step d ). The succeeding and preceding sentences are displayed with the referred original sentence ( step e ).

The dotted mesh part (corresponding to the underlined part of the translated sentence ) in the original sentence display region 18b shown in Fig. 7 is the referred sentence, and this part is highlighted, for example, with higher brightness than the succeeding and preceding sentences.

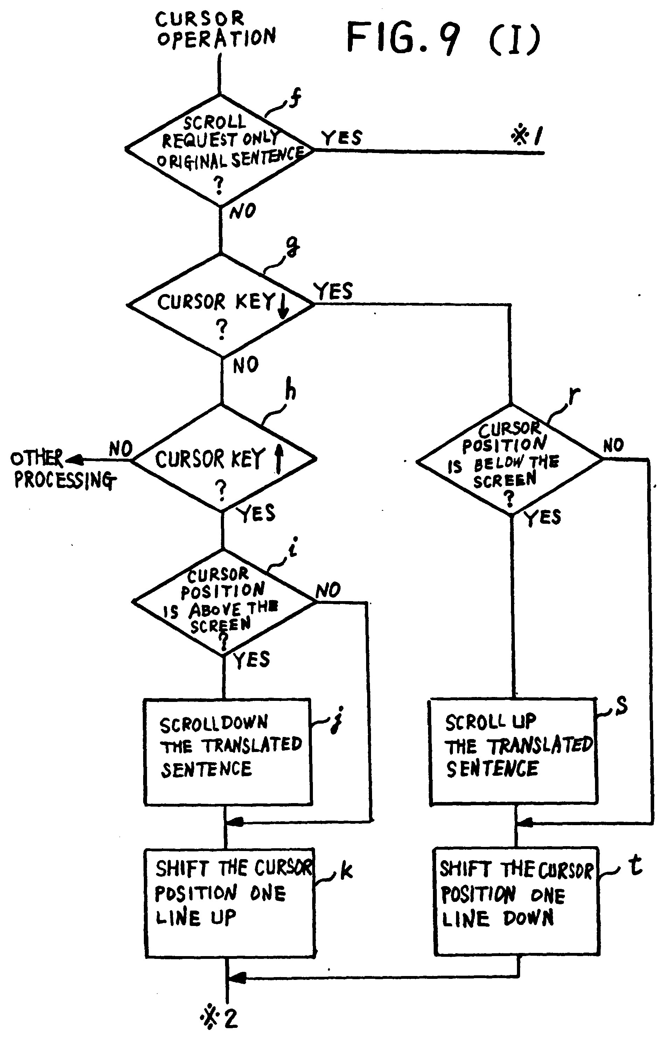

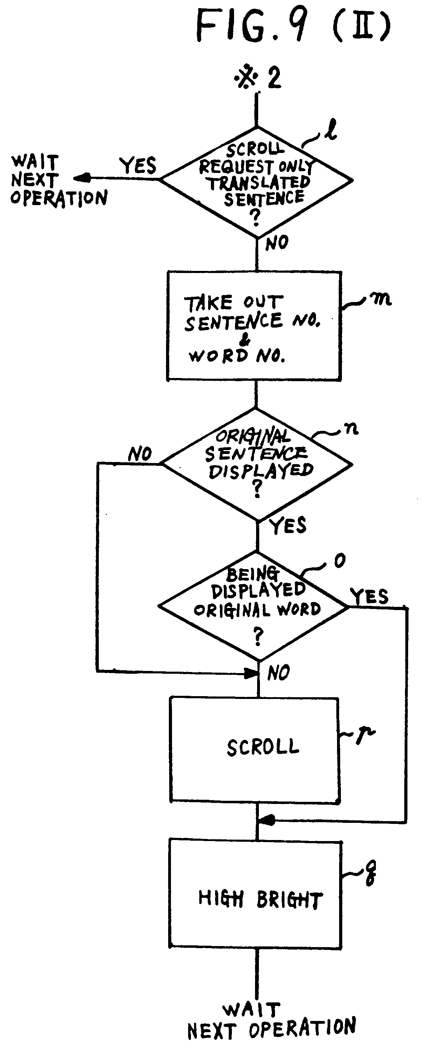

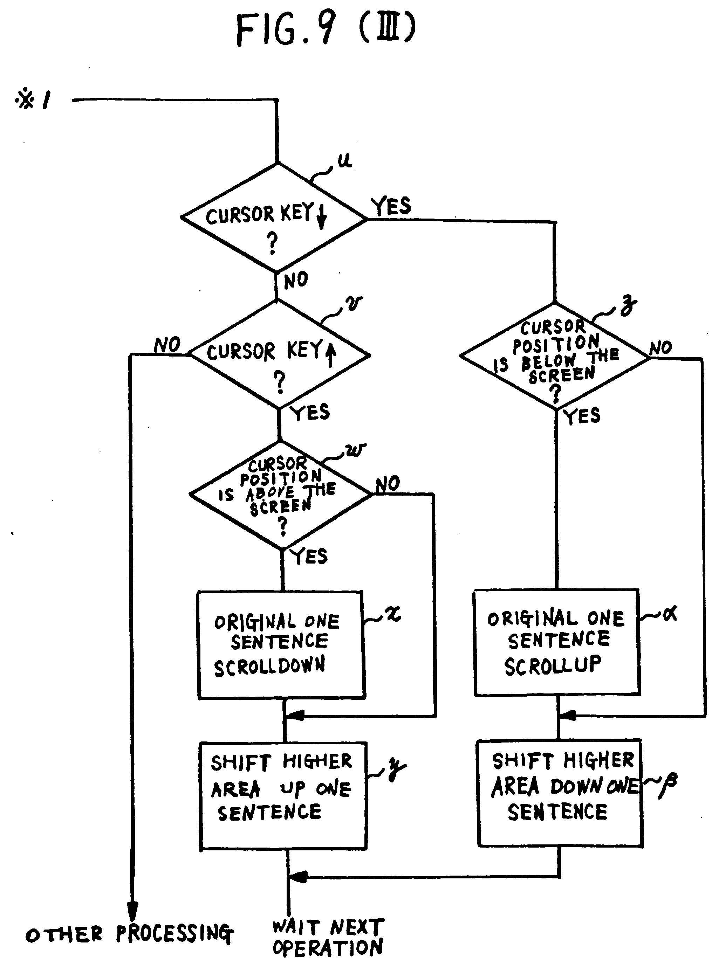

Fig. 9 describes the flow chart of the scrolling function in the state of displaying both sentences, i.e., translated sentences and referred original sentences.

An operator requests the scrolling to handle the cursor, and selects synchronized scrolling of the translated and original sentence if desired ( step f ). If synchronized scrolling is requested, the cursor movement direction is selected ( steps g, h ), and the cursor position is checked to determine whether it is an upper limit or not ( step i ). The translated sentence is scrolled down when the cursor reaches the upper limit ( step j ).

Scrolling down is executed, e.g., to shift the data on the translation storage section 16b, and to redisplay each line. If the display apparatus has a scrolling function, the scrolling down is executed to redisplay only the new lines.

If the cursor position does not reach the upper limit, scrolling down is not executed ( step j ), and the cursor position is shifted up one line ( step k ).

If the cursor position does not reach the downward limit, scrolling-up is not executed, and cursor position is shifted down one line ( step t ). The cursor position is shifted to the requested position by a series of operation. At this time, if the scrolling request is for the translated sentence only, the scrolling process is terminated ( step 1 ).

Next, operation of the synchronized scrolling will be explained. The sentence number and the word number of the requested translated sentence are identified based on the referring requested cursor position in the translated sentence ( step m ).

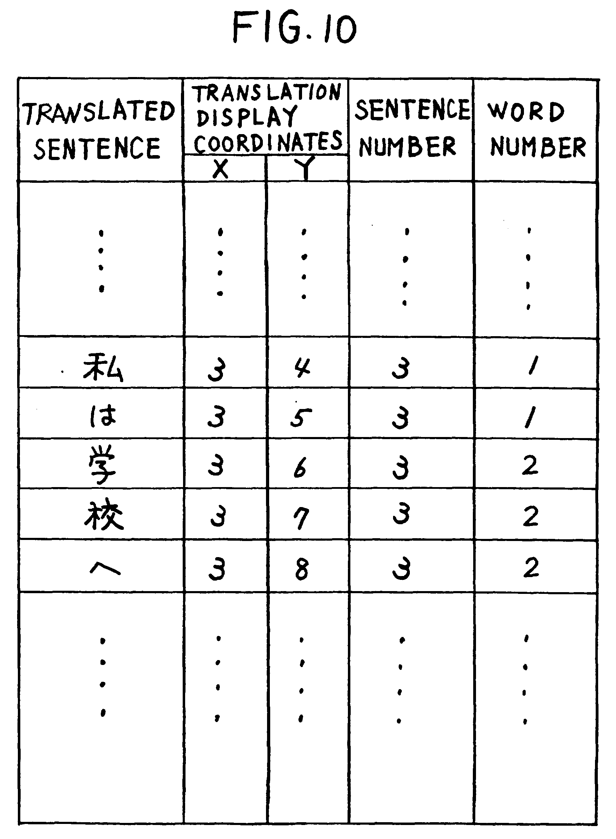

The sentence number and the word number are provided using a corresponding table in which the sentence and word numbers are stored. Fig. 10 describes a format for such a corresponding table. The position of the translated sentence is provided in terms of coordinates, on the X and Y axes of the display screen. The X and Y axes correspond to each character of the translated sentence. The sentence number and the word number of the original sentence correspond to the characters of the translated sentence.

The scrolling operation will be explained again, using Fig. 9. If the sentence and word numbers corresponding to the cursor are used, it is determined whether the original sentence corresponding to the original sentence display region is displayed ( step n ). If the corresponding original sentence is already displayed, it is determined whether the words corresponding to the cursor position are displayed in the original sentence ( step o ).

If original sentences or words corresponding to the translated sentences are not displayed, scrolling is executed to display the corresponding sentences ( step p ). The method of this scrolling is substantially the same as in the above mentioned case. The cursor on the original sentence has high brightness when the corresponding original sentence is already displayed or is moved by scrolling ( step q ) into the display. The above mentioned operations ( steps p and q ) are executed in synchronism to display the translated sentence.

If only scrolling of the original sentence requested, the scroll operation (steps g and h ) is not executed, and the scroll operation for the original display region is executed using the same process ( step u ). First, the direction of the cursor shift key is checked ( steps u and V ). It is determined whether the cursor position is at the upper limit of the original display region 18b ( step w ). If the cursor position is at the upper limit, the original sentence is scrolled down line by line ( step x ). If the cursor position is not at the upper limit, the higher brightness area is shifted up one line (step Y ).

If the cursor shift key is in the downward direction, it is determined whether the cursor position is at the downward limit of the original sentence display region 18b ( step z ). If the cursor position is at the lower limit, the original sentence is scrolled up one line ( step α ).

If the cursor position is not at the lower limit of the original sentence display region, the high brightness area is shifted down one line ( step β ).

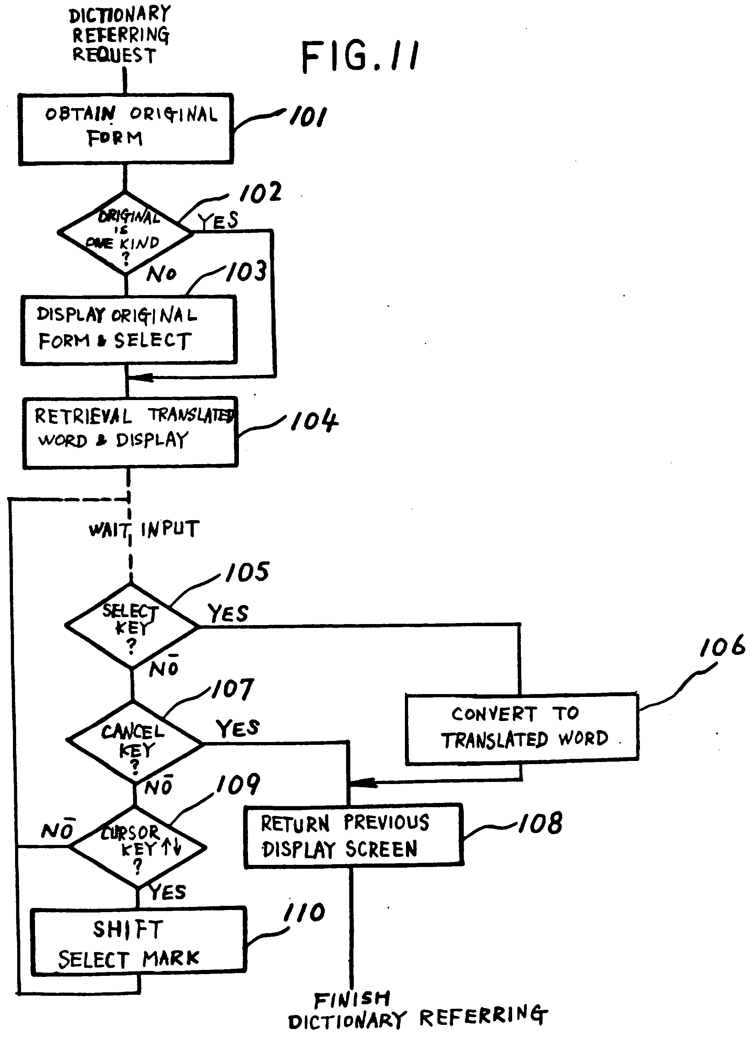

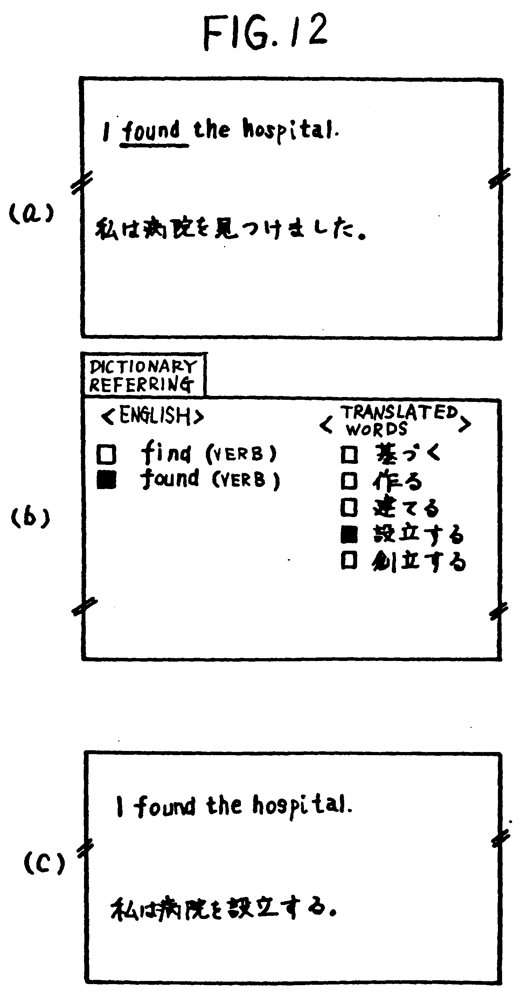

Figs. 11 and 12 describe the expansion operation of above mentioned original sentence referring request function. The functional expansions are used to refer to the translating dictionary corresponding to the original sentence, and to convert from a referred translating word to the translated sentence. The cursor control is switched to the original sentence display region 18b, shown in Fig. 12(a), and the cursor is shifted to desired original word. The function control key group 24 controls the dictionary referring request. By this operation, the original word identified by the cursor is separated from the original storage section 16a, and morpheme analysis is executed on this original word. As a result, the original format of the dictionary is obtained ( step 101 shown in Fig. 11 ).

If the original word format is one of a plurality of distinct types, all of the obtained original word formats are displayed on the screen, and an operator can select the desired word ( steps 102 and 103 ). The word dictionary 15b is retrieved using the original word format, and the corresponding translated word is displayed on the display section 18 ( step 104 ).

Next, the operator selects the desired translated words by use of the cursor shifting key (steps 109 and 110). The word header of the translated sentence corresponding to the word number of the original sentence in which that word header is stored is replaced with the translated word ( steps 105 and 106 ).

Thereafter the display screen is returned to the previous display screen, and the desired translated sentence is obtained. The display screen is simultaneously returned if a cancel key is operated ( steps 107 and 108 ).

In this invention, the corresponding original sentence is displayed on a part of the display screen during editing of the translated sentence so that an operator can to refer to it. An operator also is able to scroll the referred original sentence in synchronism with the translated sentence. Therefore editing of the translated sentence may be precisely executed while referring to the format of the original sentence.

Further, an operator can effectively confirm the translation result while observing the content of the original format, and can effectively edit the translated sentence. Thus, the invention simplifies translation editing work and results in a more appropriate and accurate document.

## Claims

1. A method of operating a machine translation apparatus to display translated sentences and their corresponding original sentences for inspection on a display section of a machine translation apparatus, in which a plurality of translated sentences are displayed on at least part of the display, and corresponding original sentences can also be displayed, characterised by the provision of two different display modes which can be controlled by the operator, the two modes comprising a first mode in which only translated text is displayed for editing purposes, and a second mode, in what at least one original sentence corresponding to the currently displayed translated text is displayed in a predetermined area of the display, the second mode being invoked by a user operation which comprises the steps of:
(a) moving the cursor to a desired part of translated text,
(b) entering a command comprising an original sentence reference request,
(c) establishing a display region for displaying original sentences; and
(d) displaying the original sentences including the part of the original text corresponding to the desired part of translated text.

2. A method of operating a machine translation apparatus according to claim 1 further comprising an initial stage in which original text is stored in an original storage section; translated text is stored in a translation storage section; and a correspondence table is generated, including position headers for identifying the correspondence between parts of the original text, and parts of the translated text.

3. A method according to claim 2 in which said position headers comprise paragraph headers, sentence headers and word headers.

4. A method according to claim 1 or claim 2 wherein the original sentence is displayed together with succeeding and preceding original sentences.

5. A method according to any preceding claim further comprising the step of highlighting, brightening or underlining the original sentence corresponding to the identified translated sentence.

6. A method according to any preceding claim further comprising the step of scrolling the displayed translated sentence forward to display additional succeeding sentences and backward to display additional preceding sentences.

7. A method according to claim 6 in which the scrolling operation is arranged to simultaneously scroll the displayed original sentences in synchronism with the displayed translated sentence by detecting the corresponding positions in the texts.

8. A method according to any of claims 1 to 4 including the step of scrolling only the displayed original sentences forward for displaying additional succeeding sentences and backward for displaying additional preceding sentences.

9. A method according to claim 1 also including the step of displaying retrieved translated words of the selected original word in the displayed original sentence in a display region of a designed size in accordance with a dictionary referring request.

10. A method according to claim 1 also including the step of converting the equivalent translated word in the displayed translated sentence to the selected retrieval translated word.

## Patentansprüche

1. Verfahren zum Betreiben einer maschinellen Übersetzungsvorrichtung zum Anzeigen übersetzter Sätze und ihrer entsprechenden Originalsätze zur Kontrolle auf einem Bildschirmabschnitt einer maschinellen Übersetzungsvorrichtung, bei der eine Mehrzahl übersetzter Sätze auf mindestens einem Teil des Bildschirms angezeigt wird und entsprechende Originalsätze auch angezeigt werden können, gekennzeichnet durch Bereitstellen zweier verschiedener Anzeigemodi, die durch den Benutzer gesteuert werden können, wobei die zwei Modi einen ersten Modus, in dem nur übersetzter Text für Bearbeitungszwecke angezeigt wird, und einen zweiten Modus umfassen, in dem mindestens ein Originalsatz entsprechend dem gegenwärtig angezeigten übersetzten Text in einem festgelegten Gebiet des Bildschirms angezeigt wird, wobei der zweite Modus durch eine Benutzeroperation aufgerufen wird, die die Schritte aufweist:
(a) Bewegen des Cursors auf einen gewünschten Teil des übersetzten Textes,
(b) Eingabe eines Kommandos mit einer Originalsatz-Bezugsanfrage,
(c) Einrichten eines Bildschirmgebiets zum Anzeigen der Originalsätze; und
(d) Anzeigen der Originalsätze mit dem Teil des Originaltextes entsprechend dem gewünschten Teil des übersetzten Textes.

2. Verfahren zum Betreiben einer maschinellen Übersetzungsvorrichtung nach Anspruch 1, weiterhin mit einer Beginnphase, in der Originaltext in einem Original-Speicherabschnitt abgespeichert wird; übersetzter Text in einem Übersetzungs-Speicherabschnitt abgespeichert wird; und eine entsprechende Tabelle mit Positions-Kopfinformationen zur Identifizierung der Entsprechung zwischen Teilen des Originaltextes und Teilen des übersetzten Textes erzeugt wird.

3. Verfahren nach Anspruch 2, wobei die Positionstitel Abschnittstitel, Satztitel und Worttitel haben.

4. Verfahren nach Anspruch 1 oder 2, wobei der Originalsatz zusammen mit nachfolgenden und vorhergehenden Originalsätzen angezeigt wird.

5. Verfahren nach einem der vorhergehenden Ansprüche, weiterhin mit dem Schritt Hervorheben, Aufhellen oder Unterstreichen des Originalsatzes entsprechend dem identifizierten übersetzten Satz.

6. Verfahren nach einem der vorhergehenden Ansprüche, weiterhin mit dem Schritt des Bilddurchlaufs des angezeigten übersetzten Satzes nach vorne, um zusätzliche nachfolgende Sätze anzuzeigen, und zurück, um zusätzliche vorhergehende Sätze anzuzeigen.

7. Verfahren nach Anspruch 6, wobei die Bilddurchlaufoperation zum gleichzeitigen Durchlaufen der angezeigten Originalsätze synchron mit den angezeigten, übersetzten Sätzen durch Erkennen der entsprechenden Positionen in den Texten eingerichtet ist.

8. Verfahren nach einem der Ansprüche 1 bis 4 mit dem Schritt des Bilddurchlaufs nur der angezeigten Originalsätze nach vorne, zum Anzeigen zusätzlicher nachfolgender Sätze, und zurück, zum Anzeigen zusätzlicher vorhergehender Sätze.

9. Verfahren nach Anspruch 1, außerdem mit dem Schritt des Anzeigens abgefragter, übersetzter Wörter des ausgewählten Originalwortes in dem angezeigten Originalsatz in einem Bildschirmgebiet einer gewählten Größe gemäß einer Wörterbuch-Bezugsanfrage.

10. Verfahren nach Anspruch 1, außerdem mit dem Schritt des Umwandelns des äquivalenten übersetzten Wortes in dem angezeigten übersetzten Satz in das ausgewählte abgefragte übersetzte Wort.

## Revendications

1. Procédé d'utilisation d'un appareil de traduction par machine pour afficher des phrases traduites et les phrases originales correspondantes afin de les examiner sur une partie de l'écran d'un appareil de traduction par machine, dans lequel une pluralité de phrases traduites sont affichées sur une partie au moins de l'écran, et les phrases originales correspondantes peuvent aussi être affichées, caractérisé par la prévision de deux modes d'affichage différents qui peuvent être commandés par l'opérateur, les deux modes étant constitués par un premier mode dans lequel seul le texte traduit est affiché à des fins d'édition, et un second mode, dans lequel au moins une phrase originale correspondant au texte traduit actuellement affiché est affichée dans une région prédéterminée de l'écran, le second mode étant appelé par un utilisateur effectuant l'opération constituée par les étapes suivantes :
(a) déplacer le curseur jusqu'à une partie désirée du texte traduit,
(b) introduire une commande consistant à demander une référence à la phrase originale,
(c) définir une région d'affichage des phrases originales, et
(d) afficher les phrases originales contenant la partie du texte originale correspondant à la partie désirée du texte traduit.

2. Procédé d'utilisation d'un appareil de traduction par machine selon la revendication 1, comprenant en outre une étape initiale au cours de laquelle le texte original est mémorisé dans une partie de mémoire de l'original ; le texte traduit est mémorisé dans une partie de mémoire de traduction ; et une table de correspondance est établie avec des indicateurs de position pour identifier la correspondance entre des parties du texte original et des parties du texte traduit.

3. Procédé selon la revendication 2, dans lequel les repères de position comprennent des débuts de paragraphes, des débuts de phrases et des débuts de mots.

4. Procédé selon la revendication 1 ou 2, dans lequel la phrase originale est affichée en même temps que les phrases originales précédentes et suivantes.

5. Procédé selon l'une quelconque des revendications précédentes, comprenant en outre l'étape de mise en valeur, de mise en surbrillance ou de soulignage de la phrase originale correspondant à la phrase traduite identifiée.

6. Procédé selon l'une quelconque des revendications précédentes, comprenant en outre l'étape de défilement de la phrase traduite affichée en avant pour afficher les phrases supplémentaires suivantes, et en arrière pour afficher des phrases supplémentaires précédentes.

7. Procédé selon la revendication 6, dans lequel l'opération de défilement est organisée pour faire défiler simultanément les phrases originales affichées en synchronisme avec la phrase traduite affichée en détectant les positions correspondantes dans les deux textes.

8. Procédé selon l'une quelconque des revendications 1 à 4, comprenant l'étape de défilement des phrases originales affichées uniquement en avant pour afficher les phrases suivantes supplémentaires, et en arrière pour afficher des phrases précédentes supplémentaires.

9. Procédé selon la revendication 1, comprenant aussi l'étape d'affichage des mots traduits retrouvés pour le mot original choisi dans la phrase originale affichée dans une région d'affichage de dimension souhaitée en fonction d'une demande de référence au dictionnaire.

10. Procédé selon la revendication 1, comprenant aussi l'opération de conversion du mot traduit équivalent de la phrase traduite affichée au mot traduit choisi retrouvé*.*
